# EUROPEAN PATENT APPLICATION

(11) **EP 4 783 245 A1**
(43) Date of publication of application: **29.07.2026**
(21) Application number: 24867603.3
(22) Date of filing: 23.09.2024
(51) Int. Cl.: H01M 4/13, H01M 10/0525

(54) **NEGATIVE ELECTRODE SHEET, LITHIUM-ION BATTERY AND ELECTRIC DEVICE**

(30) Priority: 22.09.2023 CN 202311233157
(71) Applicant: SVOLT Energy Technology Co., Ltd., Changzhou, Jiangsu 213200 (CN)
(72) Inventor: JIAN, Jiejie, Changzhou, Jiangsu 213200 (CN); LIU, Jing, Changzhou, Jiangsu 213200 (CN); SHENG, Jie, Changzhou, Jiangsu 213200 (CN)
(74) Representative: Michalski Hüttermann & Partner mbB
(86) International application number: PCT/CN2024/120449
(87) International publication number: WO 2025/061200

(57) **Abstract**

The present disclosure relates to a negative electrode sheet, a lithium-ion battery and an electric device. The compaction density A, the liquid absorption time B and the liquid retention rate C of the negative electrode sheet satisfy the following relational expression: 2.65≤100A/(B×C)≤7.74, where the unit of A is g/cm³, the unit of B is s, and the compaction density A of the negative electrode sheet is 1.30 to 1.75 g/cm³. By means of controlling 100A/(B×C) to be a value within a specific range, the regulation and control of cycle performance and a high capacity can be realized. The negative electrode sheet not only has a relatively high specific capacity, but also has excellent cycle service life and safety.

## Description

### CROSS-REFERENCE TO THE RELATED APPLICATIONS

This application claims priority to Chinese Patent Application No. 202311233157.4, filed with the China National Intellectual Property Administration on September 22, 2023 and entitled "NEGATIVE ELECTRODE SHEET, LITHIUM-ION BATTERY AND ELECTRIC DEVICE", the contents of which are incorporated herein by reference in entirety.

### TECHNICAL FIELD

The present disclosure relates to the field of lithium-ion battery technologies, and specifically to a negative electrode sheet, a lithium-ion battery, and an electric device.

### BACKGROUND

With the rapid development of new energy vehicles, addressing the problem of short driving range of electric vehicles has been put on the agenda, creating an urgent need to develop lithium-ion batteries with high energy density. One approach to increasing the capacity of the lithium-ion batteries is to increase the compaction density of positive and negative electrode sheets. The positive and negative electrode sheets are key materials in lithium-ion batteries. During the manufacturing of lithium-ion batteries, the compaction density is closely related to the specific capacity, efficiency, and internal resistance of the electrode sheets, and the cycle performance of batteries.

Herein, when the compaction density is excessively low, a relatively high porosity causes some particles to detach during cycling, forming an insulating state and failing to participate in charging and discharging, resulting in a low discharge specific capacity. Moreover, the contact between the electrode coating and the current collector is poor, leading to high contact internal resistance and exchange impedance. Generally, within an allowable compaction range of materials, a higher compaction density of the electrode sheet leads to a higher battery capacity. Therefore, the compaction density is also regarded as one of the reference indicators for the energy density of materials.

However, when the compaction density is excessively high, the extrusion between material particles is severe, and the porosity of the electrode sheet is low, leading to poor electrolyte absorption capacity of the electrode sheet, making it difficult for the electrolyte to infiltrate. Electron conduction and ion conduction are mismatched, forming dead lithium or lithium plating regions, leading to low utilization of the specific capacity of materials, poor electrolyte retention capacity of batteries, significant polarization during battery cycling, increased decay, significantly increased internal resistance, and poor rate performance and cycle performance.

Therefore, identifying an appropriate compaction density is crucial for battery design.

### SUMMARY

A negative electrode sheet is provided, wherein a compaction density A of the negative electrode sheet, an electrolyte absorption time (liquid absorption time) B of the negative electrode sheet, and an electrolyte retention rate (liquid retention rate) C of the negative electrode sheet satisfy the following relational expression: 2.65≤100A/(B×C)≤7.74, where the unit of A is g/cm³, the unit of B is s, and the compaction density A of the negative electrode sheet is 1.30-1.75 g/cm³.

In some embodiments, the compaction density A of the negative electrode sheet is 1.40-1.75 g/cm³.

In some embodiments, the electrolyte absorption time B of the negative electrode sheet is 40-220 s.

In some embodiments, the electrolyte retention rate C of the negative electrode sheet is 30%-42%.

In some embodiments, the electrolyte absorption time B is the time required for an electrolyte to completely infiltrate the negative electrode sheet.

In some embodiments, the electrolyte retention rate is C=(m₂-m₁)/(m₁-m₀)×100%, wherein m₀ is the mass of a current collector in the negative electrode sheet, m₁ is a total mass of the negative electrode sheet before being infiltrated with an electrolyte, and m₂ is a total mass of the negative electrode sheet after being completely infiltrated with the electrolyte.

In some embodiments, an initial discharge specific capacity of the negative electrode sheet is ≥320 mAh/g.

In some embodiments, a capacity retention of the negative electrode sheet after 200 cycles at 1C is ≥ 90%.

In some embodiments, a capacity retention of the negative electrode sheet after 500 cycles at 1C is ≥ 89%.

In some embodiments, a capacity retention of the negative electrode sheet after 800 cycles at 1C is ≥ 87%.

A lithium-ion battery is provided, including the negative electrode sheet.

An electric device is provided, including the lithium-ion battery.

### DETAILED DESCRIPTION OF THE EMBODIMENTS

Advantages of embodiments in the application will be set forth in the part of embodiments of the specification below, some of which are apparent from the specification or may be obtained through some of the embodiments of the present disclosure.

The technical solutions of the present disclosure are further illustrated below through some embodiments.

In order to make the objectives, technical solutions, and advantages of the present disclosure clearer, the present disclosure is further described in detail below with reference to embodiments. It should be understood that the embodiments described herein are merely for explaining the present disclosure and are not intended to limit the present disclosure. Furthermore, the technical features involved in various embodiments of the present disclosure described below may be combined with each other as long as they do not conflict with each other. Without departing from the principles of the embodiments of the present disclosure, several improvements and modifications may also be made, and these improvements and modifications are also considered to be within the scope of protection of the embodiments of the present disclosure.

In the first aspect, the present disclosure provides a negative electrode sheet. A compaction density A of the negative electrode sheet, an electrolyte absorption time B of the negative electrode sheet, and an electrolyte retention rate C of the negative electrode sheet satisfy the following relational expression: 2.65≤100A/(B×C)≤7.74.

That is, a value of 100A/(B×C) is 2.65-7.74, including, but not limited to, a point value of any one of 2.65, 2.8, 3.0, 3.2, 3.5, 3.8, 4.0, 4.4, 4.7, 5.0, 5.1, 5.4, 5.7, 6.0, 6.5, 6.8, 7.0, 7.3, 7.5, and 7.74, or a range between any two thereof.

Herein, the unit of the compaction density A is g/cm³.

The unit of the electrolyte absorption time B is s (second).

It may be understood that the electrolyte absorption time is the time required for an electrolyte (e.g., propylene carbonate (PC)) to completely infiltrate the negative electrode sheet, or the time required for the electrolyte to be completely absorbed.

Moreover, the compaction density A of the negative electrode sheet is 1.30-1.75 g/cm³, including, but not limited to, a point value of any one of 1.30 g/cm³, 1.305 g/cm³, 1.40 g/cm³, 1.405 g/cm³, 1.50 g/cm³, 1.55 g/cm³, 1.60 g/cm³, 1.65 g/cm³, 1.70 g/cm³, and 1.75 g/cm³, or a range between any two thereof.

An appropriate compaction density of the electrode sheet can increase the discharge capacity of batteries, reduce the internal resistance, reduce the polarization loss, prolong the cycle life of batteries, and improve the utilization of the lithium-ion batteries. Generally, within an allowable compaction range of materials, a higher compaction density of electrode sheets indicates a higher capacity of batteries. That is, the high compaction density can increase the discharge capacity of batteries.

However, as the compaction density increases, the porosity of the electrode sheet is low, leading to poor electrolyte absorption capacity of the electrode sheet, making it difficult for the electrolyte to infiltrate. Electron conduction and ion conduction are mismatched, forming dead lithium or lithium plating regions, leading to low utilization of the specific capacity of materials, poor electrolyte retention capacity of batteries, significant polarization during battery cycling, increased decay, significantly increased internal resistance, and poor rate performance and cycle performance.

Therefore, how to comprehensively achieve a balance between high capacity and long cycle performance is a key point and challenge in the screening of negative electrode sheets. In the present disclosure, by controlling the compaction density, electrolyte absorption time, and electrolyte retention rate of different negative electrode sheets, the negative electrode sheet satisfying the relational expression 2.65≤100A/(B×C)≤7.74 is screened out, which can effectively ensure the capacity, infiltration property, and electrolyte retention rate of the negative electrode sheet, thereby achieving a balance between the capacity and long cycle performance.

Therefore, for the negative electrode sheet provided in the present disclosure, while a high compaction density of the electrode sheet is achieved, the relationship between the compaction density, electrolyte absorption time, and electrolyte retention rate of the electrode sheet is balanced, thus enabling good long-term cycle stability under a condition of ensuring the battery capacity.

In specific some embodiments, in order to further comprehensively consider the specific capacity and cycle performance, the compaction density A of the negative electrode sheet is 1.40-1.75 g/cm³, including, but not limited to, a point value of any one of 1.40 g/cm³, 1.405 g/cm³, 1.50 g/cm³, 1.55 g/cm³, 1.60 g/cm³, 1.65 g/cm³, 1.70 g/cm³, and 1.75 g/cm³, or a range value between any two thereof.

In some specific embodiments, in order to further comprehensively consider the specific capacity and cycle performance, the electrolyte absorption time B of the negative electrode sheet is 40-220 s, including, but not limited to, a point value of any one of 40 s, 50 s, 60 s, 70 s, 80 s, 90 s, 100 s, 110 s, 120 s, 140 s, 150 s, 180 s, 200 s, and 220 s, or a range between any two thereof.

In some specific embodiments, in order to further comprehensively consider the specific capacity and cycle performance, the electrolyte retention rate C of the negative electrode sheet is 30%-42%, including, but not limited to, a point value of any one of 30%, 31%, 32%, 33%, 34%, 35%, 36%, 37%, 38%, 39%, 40%, 41%, and 42%, or a range between any two thereof.

In some embodiments, the electrolyte absorption time B is the time required for an electrolyte to completely infiltrate the negative electrode sheet.

In some embodiments, the electrolyte absorption time is the time required for 4 µl of the electrolyte to completely infiltrate the negative electrode sheet.

For example, if a dropping time is t₁ and the time for complete infiltration by the electrolyte after dropping is t₂, then the electrolyte absorption time is B=t₂-t₁, wherein units of t₂ and t₁ are both s.

In some specific embodiments, the electrolyte retention rate is C=(m₂-m₁)/(m₁-m₀)× 100%, wherein m₀ is the mass of a current collector in the negative electrode sheet, m₁ is the total mass of the negative electrode sheet before being infiltrated with the electrolyte, and m₂ is the total mass of the negative electrode sheet after being completely infiltrated with the electrolyte.

In some specific embodiments, the current collector includes a copper foil.

In some specific embodiments, the negative electrode sheet with the mass of m₁ is immersed in the electrolyte, sealed and immersed for 24 h, and then the mass m₂ of the negative electrode sheet after the infiltration is weighed, which is substituted into the above formula C=(m₂-m₁)/(m₁-m₀)×100% for calculation.

In some specific embodiments, the compaction density A of the negative electrode sheet = areal density of the negative electrode sheet / (thickness of the negative electrode sheet - thickness of the current collector).

In some specific embodiments, the thickness of the negative electrode sheet is adjusted by controlling a roll pressure on a coated electrode sheet, thereby achieving adjustment on the compaction density of the negative electrode sheet.

In some specific embodiments, the electrolyte absorption time and the electrolyte retention rate can be adjusted by adjusting the compaction density.

In some specific embodiments, an initial discharge specific capacity of the negative electrode sheet is ≥320 mAh/g, including, but not limited to, a point value of any one of 325 mAh/g, 328 mAh/g, 330 mAh/g, 336 mAh/g, 340 mAh/g, 345 mAh/g, 350 mAh/g, 356 mAh/g, 360 mAh/g, 400 mAh/g, 450 mAh/g, and 500 mAh/g, or a range between any two thereof.

The negative electrode sheet provided in the present disclosure has a relatively high initial discharge specific capacity.

In some specific embodiments, a capacity retention of the negative electrode sheet after 200 cycles at 1C is ≥ 90%, including, but not limited to, a point value of any one of 90.5%, 91%, 91.5%, 92%, 93%, 93.5%, and 94%, or a range between any two thereof.

In some specific embodiments, a capacity retention of the negative electrode sheet after 500 cycles at 1C is ≥ 89%, including, but not limited to, a point value of any one of 89%, 90%, 91%, 92%, 93%, and 94%, or a range between any two thereof.

In some specific embodiments, a capacity retention of the negative electrode sheet after 800 cycles at 1C is ≥ 87%, including, but not limited to, a point value of any one of 87%, 88%, 89%, 90%, 91%, 92%, 93%, and 94%, or a range between any two thereof.

In some specific embodiments, a capacity retention of the negative electrode sheet after 3000 cycles at 1C is ≥80%, including, but not limited to, a point value of any one of 80%, 81%, 82%, 83%, 84%, and 85%, or a range between any two thereof.

The negative electrode sheet provided in the present disclosure also has excellent cycle performance.

It may be understood that the above electrochemical performance results are all electrochemical performance measured after the negative electrode sheet is fabricated into a lithium-ion battery.

Herein, the above negative electrode sheet may be fabricated using any conventional method, which is not limited in the present disclosure.

In some specific embodiments, the negative electrode sheet includes a negative electrode active material. Herein, the negative electrode active material includes any negative electrode active substance that is commercially available or prepared according to the prior art. For example, the negative electrode active material may be one or more of natural graphite, artificial graphite, mesocarbon microbeads (MCMB), hard carbon (coal-based), soft carbon (coal-based), hard carbon (biomass-based), soft carbon (biomass-based), silicon-based materials, tin-based materials, lithium titanate, and metallic sodium, but is not limited thereto.

In some specific embodiments, the negative electrode sheet includes a current collector and a negative electrode material coated on the current collector. Herein, the current collector includes, but is not limited to, a copper foil. In addition to the negative electrode active material, the negative electrode material further includes at least one of a binder and a conductive agent. The binder may be a binding material commonly used in the art, for example, at least one of polyvinylidene fluoride, polyvinylidene fluoride-hexafluoropropylene, polytetrafluoroethylene, sodium carboxymethyl cellulose, styrene-butadiene rubber, and water-based adhesive. The conductive agent may be a conductive material commonly used in the art, such as at least one of conductive graphite, acetylene black, carbon nanotubes, nano-powder, and graphene.

In the second aspect, the present disclosure provides a lithium-ion battery, including the negative electrode sheet.

The lithium-ion battery provided in the present disclosure has a high specific capacity and excellent cycle performance, and exhibits high safety.

In some specific embodiments, the lithium-ion battery further includes a positive electrode sheet, a separator, and an electrolyte.

Herein, the positive electrode sheet, the separator, and the electrolyte may each be made of any commercially available or commonly used material in the art, which is not limited in the present disclosure.

In the third aspect, the present disclosure provides an electric device, including the lithium-ion battery.

Herein, the electric device includes any apparatus, device, or system that uses the above lithium-ion battery, such as an electric vehicle, an electric motorcycle, a power tool, an energy storage system, an electronic product, or office equipment, but is not limited thereto.

### Example 1 to Example 14

A preparation method for a negative electrode sheet in Example 1 to Example 14 included the following steps: weighing a negative electrode active material, a conductive agent SP, CMC (carboxymethyl cellulose, serving as a binder), and SBR (styrene-butadiene rubber, serving as a binder) according to a mass ratio of 95:1.5:1.5:2.0, then mixing them uniformly using a mixer, and preparing the negative electrode sheet using a coating machine and a roll press.

In Example 1 to Example 14, a method for adjusting different compaction densities is as follows: for coated negative electrode sheets, different negative electrode sheets were respectively pressed to different thicknesses by adjusting the pressure. Herein, the compaction density A of the negative electrode sheet = areal density of the negative electrode sheet / (thickness of the negative electrode sheet - thickness of the current collector).

In Example 1 to Example 14, a test method for the electrolyte absorption time B is as follows: 4 µl of PC was dropped onto the surface of each negative electrode sheet using a microsyringe, the dropping time was recorded as t₁, and after complete infiltration of the PC, the time of complete infiltration was recorded as t₂, where the electrolyte absorption time is B=t₂-t₁, wherein the units of t₂ and t₁ are both s.

In Example 1 to Example 14, a test method for the electrolyte retention rate C is as follows: the negative electrode sheet with the mass m₁ was immersed in PC, sealed and immersed for 24 h, the mass m₂ of the infiltrated negative electrode sheet was weighed, and then the value of the electrolyte retention rate C was calculated according to the formula C=(m₂-m₁)/(m₁-m₀)×100%, where m₀ is the mass of the current collector in the negative electrode sheet, m₁ is the total mass of the negative electrode sheet before infiltration, and m₂ is the total mass of the negative electrode sheet after complete infiltration.

The compaction density A, electrolyte absorption time B, electrolyte retention rate C, value of 100A/(B×C), and types of the negative electrode active materials used for the negative electrode sheets in Example 1 to Example 14 are shown in Table 1 below.

### Comparative Example 1 to Comparative Example 10

The preparation method for a negative electrode sheet, and the test methods for the compaction density A, electrolyte absorption time B, and electrolyte retention rate C of the negative electrode sheets in Comparative Example 1 to Comparative Example 10 were the same as those in Example 1 to Example 14. The compaction density A, electrolyte absorption time B, electrolyte retention rate C, value of 100A/(B×C), and types of negative electrode active materials used for the negative electrode sheets prepared in Comparative Example 1 to Comparative Example 10 are shown in Table 1 below.

**Table 1 Types of Negative Electrode Active Materials, Compaction Density, Electrolyte Absorption Time, Electrolyte Retention Rate, and Value of 100A/(B×C) of Negative Electrode Sheets**

| Group | Negative Electrode Active Material | Compaction Density | Electrolyte Absorption Time (s) | Electrolyte Retention Rate | 100A/(B×C) |
|---|---|---|---|---|---|
| Example 1 | Graphite | 1.30 | 40 | 42% | 7.74 |
| Example 2 | Graphite | 1.305 | 50 | 41.5% | 6.51 |
| Example 3 | Graphite | 1.40 | 60 | 40.82% | 5.72 |
| Example 4 | Graphite | 1.405 | 70 | 40.5% | 5.11 |
| Example 5 | Graphite | 1.50 | 80 | 39.80% | 4.71 |
| Example 6 | Graphite | 1.55 | 90 | 38.75% | 4.44 |
| Example 7 | Graphite | 1.60 | 110 | 37.5% | 3.88 |
| Example 8 | Graphite | 1.65 | 140 | 36% | 3.27 |
| Example 9 | Graphite | 1.70 | 180 | 33.7% | 2.86 |
| Example 10 | Graphite | 1.75 | 220 | 30% | 2.65 |
| Example 11 | Graphite + silicon | 1.55 | 85 | 41% | 4.44 |
| Example 12 | Graphite + silicon | 1.6 | 90 | 40% | 4.44 |
| Example 13 | Graphite + hard carbon | 1.5 | 75 | 42% | 4.76 |
| Example 14 | Graphite + hard carbon | 1.55 | 85 | 40% | 4.55 |
| Comparative Example 1 | Graphite | 1.2 | 20 | 44% | 13.64 |
| Comparative Example 2 | Graphite | 1.25 | 30 | 43% | 9.69 |
| Comparative Example 3 | Graphite | 1.8 | 260 | 26.5% | 2.61 |
| Comparative Example 4 | Graphite | 1.85 | 335 | 22% | 2.51 |
| Comparative Example 5 | Graphite | 1.30 | 30 | 42% | 10.32 |
| Comparative Example 6 | Graphite | 1.30 | 40 | 25% | 13 |
| Comparative Example 7 | Graphite | 1.75 | 250 | 30% | 2.33 |
| Comparative Example 8 | Graphite | 1.75 | 220 | 10% | 7.95 |
| Comparative Example 9 | Graphite + silicon | 1.8 | 230 | 30% | 2.53 |
| Comparative Example 10 | Graphite + hard carbon | 1.8 | 250 | 28% | 2.50 |

### Experimental Examples

The negative electrode sheets in Example 1 to Example 14 and the negative electrode sheets in Comparative Example 1 to Comparative Example 10 were each used, with a lithium sheet as the positive electrode, an electrode containing a lithium salt LiPF₆ solution (with concentration of 1 mol/L) in a solvent of EC (ethylene carbonate) and DEC (diethyl carbonate) at a volume ratio of 1:1, and celgard 2400 as the separator, to assemble coin-type half-cells. Then, the initial discharge specific capacity of each cell was tested at 0.1C, and the results are shown in Table 2.

The negative electrode sheets in Example 1 to Example 14 and the negative electrode sheets in Comparative Example 1 to Comparative Example 10 were each used, with lithium iron phosphate as the positive electrode, an electrode containing a lithium salt LiPF₆ solution (with concentration of 1 mol/L) in a solvent of EC (ethylene carbonate) and DEC (diethyl carbonate) at a volume ratio of 1:1, and SEMCORP 9+1+1 as the separator, to assemble pouch cells. Then, cycle performance tests were conducted on each cell. Herein, test parameters for the cycle performance are as follows: 1C/1C, 2.5 to 3.65 V, and 25±3 °C.

**Table 2 Test Results of Specific Capacity and Cycle Performance**

| Group | Initial Discharge Specific Capacity at 0.1C (mAh/g) | Capacity Retention after 200 Cycles at 0.1C | Capacity Retention after 500 Cycles at 0.1C | Capacity Retention after 800 Cycles at 0.1C |
|---|---|---|---|---|
| Example 1 | 320.7 | 90.5% | 89% | 87.4% |
| Example 2 | 328.4 | 92% | 90% | 88.8% |
| Example 3 | 330.3 | 92.8 | 90.7% | 90% |
| Example 4 | 336.2 | 93% | 91% | 90.2% |
| Example 5 | 340.2 | 93.1% | 91.8 | 90.3% |
| Example 6 | 346.5 | 92.3% | 91.5% | 91% |
| Example 7 | 350.4 | 93.2% | 93.4% | 92.5% |
| Example 8 | 345.6 | 93.5% | 93.7% | 93% |
| Example 9 | 356.7 | 92.8% | 92% | 90% |
| Example 10 | 350.1 | 91% | 89.6% | 89% |
| Example 11 | 385 | 92.5 | 91.0% | 88.3% |
| Example 12 | 390 | 92.8% | 91.5% | 89.2% |
| Example 13 | 345.2 | 93.0% | 92.4% | 91.9% |
| Example 14 | 350.1 | 92.3% | 91.2% | 88.7% |
| Comparative Example 1 | 315.4 | 88.7% | 83.4% | 78.2% |
| Comparative Example 2 | 318.5 | 90.5% | 85.8% | 80.3% |
| Comparative Example 3 | 340.5 | 90.3% | 86.0% | 81.2% |
| Comparative Example 4 | 336.3 | 86.4% | 85.0% | 75.3% |
| Comparative Example 5 | 319.2 | 90.3% | 85.3% | 79.5% |
| Comparative Example 6 | 316.2 | 89.5% | 84.2% | 79.0% |
| Comparative Example 7 | 346.8 | 89.6% | 85.3% | 79.2% |
| Comparative Example 8 | 345.2 | 89.3% | 85.4% | 78.9% |
| Comparative Example 9 | 320.4 | 86.2% | 80.5% | 75.3% |
| Comparative Example 10 | 315.2 | 87.9% | 79.6% | 74.9% |

By comparing Examples 1 to 14 with Comparative Examples 1 to 4, it can be seen that by controlling the compaction density A, electrolyte absorption time B, and electrolyte retention rate C of the negative electrode sheets to satisfy the relational expression 2.65≤100A/(B×C)≤7.74, and by controlling the compaction density A of the negative electrode sheets to be within the range of 1.30 g/cm³ to 1.75 g/cm³, not only a relatively high specific capacity was achieved, but also good cycle performance was obtained, achieving a balance between capacity utilization and cycle performance of the negative electrode sheets.

In Comparative Example 1 and Comparative Example 2, when the compaction density was excessively low, the relatively high porosity caused some particles to detach during cycling, forming an insulating state and failing to participate in charging and discharging, resulting in a low discharge specific capacity. Moreover, the contact between the electrode coating and the current collector was poor, leading to high contact internal resistance and exchange impedance, resulting in poor cycle performance. In Comparative Example 3 and Comparative Example 4, as the compaction density was excessively high, the degree of extrusion between material particles was high, the porosity of the electrode sheets was low, and the electrolyte absorption capacity of the electrode sheets was poor, making it difficult for the electrolyte to infiltrate. Electron conduction and ion conduction were mismatched, forming dead lithium or lithium plating regions, leading to low utilization of the specific capacity of the material, poor electrolyte retention capacity of batteries, significant polarization during battery cycling, increased decay, significantly increased internal resistance, and poor cycle performance.

By comparing Example 1 and Comparative Example 5, it can be seen that although an appropriate compaction density was used in Comparative Example 5, the electrolyte absorption time was short, essentially due to the relatively low compaction, and excessively high value of 100A/(B×C), the active substance was separated from the electrode sheet during cycling, thus leading to poor cycle performance. By comparing Example 1 and Comparative Example 6, it can be seen that although an appropriate compaction density was used in Comparative Example 6, the electrolyte retention rate was low, and the value of 100A/(B×C) was excessively high, resulting in insufficient electrolyte during cycling, and thus leading to poor cycle performance.

By comparing Example 10 and Comparative Example 7, it can be seen that in Comparative Example 7, due to the long electrolyte absorption time and excessively low value of 100A/(B×C), essentially due to the relatively high compaction, the infiltration property of the electrode sheet was poor, resulting in deteriorated cycle performance. By comparing Example 10 and Comparative Example 8, it can be seen that in Comparative Example 8, due to the excessively low electrolyte retention rate, relatively high value of 100A/(B×C), and relatively high compaction, the electrolyte retention capacity of the electrode sheet was poor, and the electrolyte was insufficient during cycling, resulting in deteriorated cycle performance.

Similarly, in Comparative Example 9 and Comparative Example 10, as the compaction density was excessively high, the degree of extrusion between material particles was high, the porosity of the electrode sheets was low, and the electrolyte absorption capacity of the electrode sheets was poor, making it difficult for the electrolyte to infiltrate. Electron conduction and ion conduction were mismatched, forming dead lithium or lithium plating regions, thereby leading to low utilization of the specific capacity of the material, poor electrolyte retention capacity of batteries, significant polarization during battery cycling, increased decay, significantly increased internal resistance, and poor cycle performance.

Thus, in the present disclosure, by controlling 100A/(B×C) to be a value within a specific range, the regulation and control of cycle performance and high capacity can be comprehensively realized, achieving a balance between capacity utilization and cycle performance.

Therefore, the negative electrode sheet for a lithium-ion battery obtained using the method of the present disclosure has a relatively high specific capacity, while ensuring good cycle service life and safety of the lithium-ion battery when used under long-term fast charging, achieving significant effects.

### INDUSTRIAL APPLICABILITY

In summary, the present disclosure provides a negative electrode sheet, a lithium-ion battery, and an electric device. By controlling 100A/(B×C) to be a value within a specific range, the regulation and control of cycle performance and high capacity can be comprehensively realized. The negative electrode sheet not only has a relatively high specific capacity, but also offers excellent cycle service life and safety.

## Claims

1. Negative electrode sheet, **characterized in that** a compaction density A of the negative electrode sheet, an electrolyte absorption time B of the negative electrode sheet, and an electrolyte retention rate C of the negative electrode sheet satisfy the following relational expression: 2.65≤100A/(B×C)≤7.74, wherein the unit of A is g/cm³, and the unit of B is s; and
the compaction density A of the negative electrode sheet is 1.30-1.75 g/cm³.

2. Negative electrode sheet as claimed in claim 1, **characterized in that** the compaction density A of the negative electrode sheet is 1.40-1.75 g/cm³.

3. Negative electrode sheet as claimed in claim 1, **characterized in that** the electrolyte absorption time B of the negative electrode sheet is 40-220 s.

4. Negative electrode sheet as claimed in claim 1, **characterized in that** the electrolyte retention rate C of the negative electrode sheet is 30%-42%.

5. Negative electrode sheet as claimed in claim 1, **characterized in that** the electrolyte absorption time B is the time required for an electrolyte to completely infiltrate the negative electrode sheet.

6. Negative electrode sheet as claimed in claim 1, **characterized in that** the electrolyte retention rate is C=(m₂-m₁)/(m₁-m₀)×100%, wherein m₀ is the mass of a current collector in the negative electrode sheet, m₁ is the total mass of the negative electrode sheet before being infiltrated with an electrolyte, and m₂ is the total mass of the negative electrode sheet after being completely infiltrated with the electrolyte.

7. Negative electrode sheet as claimed in claim 1, **characterized in that** the negative electrode sheet has an initial discharge specific capacity of ≥320 mAh/g.

8. Negative electrode sheet as claimed in claim 1, **characterized by** comprising at least one of the following characteristics (1) to (3):
(1) a capacity retention of the negative electrode sheet after 200 cycles at 1C is ≥ 90%;
(2) a capacity retention of the negative electrode sheet after 500 cycles at 1C is ≥ 89%; and
(3) a capacity retention of the negative electrode sheet after 800 cycles at 1C is ≥ 87%.

9. Lithium-ion battery, **characterized by** comprising a negative electrode sheet as claimed in any one of claims 1 to 8.

10. Electric device, **characterized by** comprising a lithium-ion battery as claimed in claim 9.
